# EUROPÄISCHE PATENTSCHRIFT

(11) **EP 1 373 857 B1**
(45) Veröffentlichungstag und Bekanntmachung des Hinweises auf die Patenterteilung: **28.11.2007**
(21) Anmeldenummer: 02706763.6
(22) Anmeldetag: 15.03.2002
(51) Int. Cl.: G01N 1/31

(54) **UNTERSUCHUNGSVORRICHTUNG UND VERFAHREN ZUM UNTERSUCHEN CHEMISCHER UND/ODER BIOLOGISCHER PROBEN**
EXAMINATION DEVICE AND METHOD FOR EXAMINATION OF CHEMICAL AND/OR BIOLOGICAL SAMPLES
DISPOSITIF D'ANALYSE ET PROCEDE D'ANALYSE DE PRELEVEMENTS CHIMIQUES ET/OU BIOLOGIQUES

(30) Priorität: 16.03.2001 DE 10112683
(43) Veröffentlichungstag der Anmeldung: 02.01.2004
(73) Patentinhaber: Miltenyi Biotec GmbH, 51429 Bergisch Gladbach (DE)
(72) Erfinder: BOSIO, Andreas, 50931 Köln (DE)
(74) Vertreter: von Kirschbaum, Alexander
(86) Internationale Anmeldenummer: PCT/EP2002/002900
(87) Internationale Veröffentlichungsnummer: WO 2002/075280

(56) Entgegenhaltungen:
- EP-A- 1 081 233
- US-A- 4 847 208
- US-A- 6 129 828
- PATENT ABSTRACTS OF JAPAN vol. 010, no. 183 (P-472), 26. Juni 1986 (1986-06-26) & JP 61 029734 A (AKASHI SEISAKUSHO CO LTD), 10. Februar 1986 (1986-02-10)

## Beschreibung

Die Erfindung betrifft eine Untersuchungsvorrichtung sowie ein Verfahren zum Untersuchen chemischer und/oder biologischer Proben.

Mit derartigen Untersuchungsvorrichtungen werden beispielsweise Gewebeproben mit Hilfe eines Hybridisierungsverfahrens untersucht. Hierbei werden beispielsweise DNA-Stücke, d.h. Gen-Fragmente, auf der Oberfläche eines Objektträgers aufgebracht. Das Aufbringen der DNA-Stücke erfolgt durch Auftropfen mit Hilfe eines Roboters. Die Position der einzelnen DNA-Stücke auf dem Objektträger ist somit bekannt. Die DNA-Stücke verbinden sich mit der Oberfläche des Objektträgers und haften auf dieser, so dass sich ihre Position im anschließenden Untersuchungsprozess nicht verändert.

Im nächsten Schritt wird RNA beispielsweise aus einem zu untersuchenden Tumor entnommen. Mit Hilfe von Enzymen wird die RNA in DNA umgewandelt und anschließend mit geeigneten Markern, insbesondere fluoresziereriden Farbmarkern, markiert.

Zusätzlich wird eine Vergleichsprobe mit gesundem Gewebe erzeugt. Die gesunde DNA wird ebenfalls mit einem geeigneten Marker markiert. Bei dem Marker handelt es sich vorzugsweise um einen Fluoreszenzmarker anderer Farbe, so dass das gesunde Gewebe mit einem grün fluoreszierenden Marker und das beispielsweise dem Tumor entnommene, zu untersuchende Gewebe mit einem roten Farbmarker markiert ist.

Anschließend werden beide Proben auf den gesamten Objektträger aufgetragen. Die in den beiden Proben enthaltenen DNA-Stränge verbinden sich fest mit den Gegenstücken, d.h. den auf der Oberfläche des Objektträgers befindlichen DNA-Stücken. Das Verbinden der in den Proben enthaltenen DNA mit den am Objektträger haftenden DNA-Stücken erfolgt in einem Hybridisierungsprozess. Anschließend wird der Objektträger gewaschen, so dass nur noch fest haftende DNA-Stücke und angekettete DNA aus den beiden Proben auf dem Objektträger vorhanden sind.

Nach dem Trocknen des Objektträgers wird dieser einem Detektierprozess zugeführt. Hierin werden die einzelnen Positionen des Objektträgers, an denen DNA-Stücke haften, mit einem geeigneten Mikroskop untersucht. Hierbei werden die einzelnen DNA-Stücke beispielsweise mit Laserlicht angeregt, so dass die Fluoreszenzmarker in der entsprechenden Farbe fluoreszieren. Erscheint eine bestimmte Position, an der ein DNA-Stück haftet, beispielsweise-als roter Spot, kann hieraus geschlossen werden, dass dieses Gen in dem Tumor-Gewebe, nicht jedoch in dem gesunden Gewebe, aktiv war. Fluoresziert ein Spot grün, kann daraus geschlossen werden, dass dieses Gen nur in dem gesunden Gewebe aktiv war. Bei Auftreten von gelber Fluoreszenz war das entsprechende Gen in beiden Geweben aktiv. Durch vorstehendes Verfahren lässt sich diagnostizieren, welche Gene beispielsweise in einem Tumor aktiv sind. Hieraus lassen sich Rückschlüsse auf die Art der Gewebeveränderung u.dgl. ziehen.

Um ein möglichst gutes Verbinden der beiden Proben mit den auf den Objektträgern befindlichen DNA-Stücken zu realisieren, ist es bekannt, den Objektträger beispielsweise mit einem Deckel zu verschließen, so dass zwischen dem Objektträger und dem Deckel eine Probenkammer gebildet ist. Die Probenkammer wird sodann durch eine Vibrationseinrichtung in Vibrationen versetzt, um ein Bewegen der beiden Proben zu bewirken. Durch diese Bewegung finden die entsprechenden Probenbestandteile leichter die geeigneten Gegenstücke, mit denen sie sich sodann verbinden. Das Vorsehen einer Vibrationsvorrichtung hat den Nachteil, dass hierbei stehende Wellen entstehen und somit nur eine begrenzte Bewegung der Proben stattfindet.

Die in dem vorstehenden Beispiel beschriebenen Probleme bestehen auch bei anderen Untersuchungen von chemischen und/oder biologischen Proben, bei denen beispielsweise eine Probe an einem Basisteil am Objektträger fest haftet und eine andere Probe mit dieser reagieren soll.

In US 4,847,208 ist eine Vorrichtung zum Spülen von Probenträgern beschrieben. Zu diesem Zweck wird eine Flüssigkeit aus einem Speicher über eine Eintrittsöffnung in eine Kammer gepumpt, die einen Probenträger umschließt. Über eine Austrittsöffnung wird die Flüssigkeit zu einer Unterdruckquelle gesaugt. Mit der Unterdruckwelle ist eine Pipette verbunden, mit der in der Kammer verbliebene Flüssigkeit per Hand abgesaugt werden kann. Durch diese Anordnung kann ein Probenträger gewaschen werden.

Aus JP 61 029734 ist eine Anlage zur Probendurchdringung beschrieben. Hierzu wird eine Chemikalie mit Hilfe einer Pumpe aus einem Behälter in eine Probenkammer gepumpt. Nachdem eine Probe mit der Chemikalie befeuchtet wurde, wird die Chemikalie zurück in den Behälter gepumpt.

Aufgabe der Erfindung ist es, die Wahrscheinlichkeit des Auftretens von Reaktionen in Proben zu erhöhen.

Die Lösung der Aufgabe erfolgt durch eine Untersuchungsvorrichtung gemäß Patentanspruch 1 sowie ein Untersuchungsverfahren gemäß Patentanspruch 16.

Die erfindungsgemäße Untersuchungsvorrichtung weist ein Basisteil und einen Kopfteil bzw. Deckel auf. Durch das Basisteil und das Kopfteil ist eine Probenkammer ausgebildet. Bei dem Basisteil kann es sich um einen beispielsweise flachen Objektträger aus dünnem Glas handeln. Ebenso kann der Objektträger oder ein anderer Probenträger auf das Basisteil gelegt werden, so dass der Probenträger innerhalb der Probenkammer angeordnet ist. Ferner weist die erfindungsgemäße Vorrichtung eine Bewegungseinrichtung zum Bewegen der Probe in der Probenkammer auf. Als Bewegungseinrichtung weist die Untersuchungsvorrichtung erfindungsgemäß eine Fördereinrichtung auf. Mit Hilfe der Fördereinrichtung wird zumindest ein Teil der Probe aus der Probenkammer abgesaugt und anschließend der Probenkammer wieder zugeführt. Das Fördern eines Teils der Probe kann hierbei durch ein Hin- und Herbewegen der Probe erfolgen, indem ein Teil der Probe abgesaugt und in entgegengesetzte Richtung wieder zugeführt wird. Hierzu ist vorzugsweise mindestens ein Kanal mit der Probenkammer verbunden, der vorzugsweise mit einer Pumpe oder einer anderen Fördereinrichtung zum Hin- und Herbewegen der Probe verbunden ist. Eine weitere Möglichkeit zum Bewegen der Probe in der Probenkammer besteht darin, dass die Probe umgewälzt wird. Hierbei wird zumindest ein Teil der Proben vorzugsweise durch einen Abführkanal abgesaugt und vorzugsweise durch einen Zuführkanal wieder der Probenkammer zugeführt. Hierbei erfolgt ein Fördern der Probe in die gleiche Richtung.

Durch das erfindungsgemäße Vorsehen einer Fördereinrichtung als Bewegungseinrichtung der Probe ist das Auftreten stehender Wellen vermieden. Durch das Absaugen und Zuführen zumindest eines Teils der Probe ist gewährleistet, dass die gesamte in der Probenkammer vorhandene Probenmenge bewegt wird. Dies ist sowohl beim Hin- und Herbewegen zumindest eines Teils der Probe als auch beim Umwälzen zumindest eines Teils der Probe gewährleistet.

Dies wird in Abhängigkeit der Größe der Probenkammer bei einer ersten bevorzugten Ausführungsform der Erfindung dadurch sichergestellt werden, dass eine ausreichende Menge an Probe abgesaugt und anschließend der Probenkammer wieder zugeführt wird. Vorzugsweise ist daher zwischen der Fördereinrichtung, bei der es sich beispielsweise um eine Pumpe handelt, und der Probenkammer eine Aufnahmekammer zur Aufnahme und anschließenden Abgabe eines Teils der Probe vorgesehen. Durch eine entsprechende Dimensionierung der Aufnahmekammer kann beispielsweise auch ein Großteil der in der Probenkammer befindlichen Probe abgesaugt und anschließend der Probenkammer wieder zugeführt werden. Anstelle einer gesonderten Aufnahmekammer kann auch ein zwischen der Fördereinrichtung und der Probenkammer befindlicher Kanal entsprechend dimensioniert sein und als Aufnahmekammer dienen.

Bei einer besonders bevorzugten Ausführungsform sind mindestens zwei Aufnahmekammern vorgesehen. Diese sind mit einer oder zwei Fördereinrichtungen derart verbunden, dass abwechselnd ein Teil der Probe von den Probenkammern aufgenommen und abgegeben wird. Beispielsweise kann während aus der einen Aufnahmekammer Probe abgegeben wird, gleichzeitig in der anderen Probenkammer Probe aufgenommen werden. Hierdurch ist eine gleichförmige Bewegung der Probe in der Probenkammer verwirklicht. Zwischen der Abgabe der Probe aus der einen Aufnahmekammer und der Aufnahme von Probe in die andere Aufnahmekammer kann auch ein zeitlicher Abstand liegen. Ferner können sich die beiden Prozesse überschneiden.

Zur Verbesserung der Bewegung der Probe in der Probenkammer können mehrere Kanäle, vorzugsweise im Kopfteil bzw. Deckel, angeordnet sein, durch die die Probe an unterschiedlichen Stellen der Probenkammer entnommen und dieser wieder zugeführt wird. Die Entnahmestelle kann sich ggf. auch von der Zuführstelle unterscheiden, so dass ein Fördern der Probe "im Kreis" stattfindet.

Bei einer zweiten bevorzugten Ausführungsform der Erfindung wird die in der Probenkammer vorhandene Probe umgewälzt. Hierzu ist die Probenkammer mit einem Zuführkanal und einem Abführkanal verbunden. Sowohl der Zuführ- als auch der Abführkanal sind mit der Fördereinrichtung, beispielsweise der Pumpe, verbunden. Vorzugsweise ist mit dem Abführkanal ein Ventil verbunden, das wiederum mit einem Ablauf verbunden ist. Die Probe kann somit mit Hilfe der Fördereinrichtung aus der Probenkammer entnommen bzw. abgesaugt werden und sodann je nach Stellung des Ventils teilweise oder vollständig in Richtung des Ablaufs gefördert werden. Der Ablauf ist vorzugsweise mit einem Auffangbehälter verbunden, in dem die beispielsweise verbrauchte Probenflüssigkeit gesammelt und anschließend entsorgt wird. Durch ein entsprechendes Schalten des Ventils ist es beispielsweise möglich, in vorgegebenen Zeitabständen stets einen Teil der umgewälzten Probe zu entnehmen. Um einen vollständigen oder teilweisen Austausch der Probe vornehmen zu können, ist die Fördereinrichtung vorzugsweise mit einem Mediumreservoir verbunden. Das Ventil kann somit beispielsweise auch derart geöffnet werden, dass stets ein Teil der umgewälzten Probe abgeführt wird und aus dem Mediumreservoir die abgeführte Menge an Probe wieder ersetzt wird. Es erfolgt somit ein kontinuierlicher Austausch eines Teils der Probe. Selbstverständlich ist es auch möglich, das Ventil vollständig zu schließen, so dass die Probe umgewälzt wird oder das Ventil vollständig zu öffnen, so dass die gesamte in der Probenkammer befindliche Probe abgeführt wird.

Die Probenkammer ist vorzugsweise durch eine entsprechende Ausgestaltung des Kopfteils bzw. Deckels, wie einen umlaufenden rahmenförmigen am Deckel vorgesehenen Ansatz, ausgebildet. Dies hat den Vorteil, dass als Basisteil ein herkömmlicher Objektträger, beispielsweise eine flache Glasplatte, verwendet werden kann. Der an dem Deckel vorgesehene rahmenförmige Ansatz weist vorzugsweise eine umlaufende Dichtung auf, so dass die Probenkammer nach außen abgedichtet ist und keine Probenflüssigkeit zwischen dem Deckel und dem Basisteil entweichen kann.

Zusätzlich oder anstatt einen Ansatz an dem Kopfteil bzw. Deckel vorzusehen, ist es auch möglich, ein rahmenförmiges Zwischenteil zu verwenden. Das Verwenden eines rahmenförmigen Zwischenteils hat den Vorteil, dass dieses beispielsweise zum Reinigen entnommen werden kann. Ebenso ist es möglich, durch die Dicke des Zwischenteils das Volumen der Probenkammer festzulegen. Durch den Austausch des Zwischenteils ist das Volumen somit auf einfache Weise variierbar.

Bei einer besonders bevorzugten Weiterbildung der Erfindung ist eine Aufnahmevorrichtung für mehrere Objektträger vorgesehen. Die Aufnahmevorrichtung weist ein Bodenteil und mit dem Bodenteil verbundene Zentrierelemente auf. Durch die Zentrierelemente sind mehrere Aufnahmebereiche zur Aufnahme jeweils eines Objektträgers ausgebildet. Auf den Bodenteil kann je Aufnahmebereich somit ein Objektträger gelegt werden. Der Objektträger dient sodann als Basisteil und bildet zusammen mit einem Deckel eine Probenkammer. Hierzu kann je Aufnahmebereich ein gesonderter Deckel vorgesehen sein. Ebenso ist es möglich, für mehrere Aufnahmebereiche einen gemeinsamen, entsprechend geformten Deckel vorzusehen.

In die Aufnahmebereiche der Aufnahmevorrichtung kann somit jeweils ein Objektträger, auf dem beispielsweise bereits an vorgegebenen Positionen DNA-Stücke haften, eingelegt werden. Die mehrere Objektträger tragende Aufnahmevorrichtung kann sodann auf einfache Weise, beispielsweise mit Hilfe von Robotergreifarmen o.dgl., gehandhabt werden. Da die Aufnahmevorrichtung beispielsweise an den Zentrierelementen oder an dem Bodenteil leicht gefasst werden kann, ist ein Handling der Objektträger auf einfache Weise möglich. Insbesondere ist durch die erfindungsgemäße Vorrichtung sichergestellt, dass Objektträger aus dünnem Glas beim Handling nicht beschädigt werden. Auch das Berühren der bereits auf Objektträgern befindlichen Proben ist vermieden.

Vorzugsweise sind die Zentrierelemente wie einstückige Rahmenteile ausgebildet. - Somit ist jeder Objektträger von einem Rahmen umgeben. Dies hat den Vorteil, dass der Objektträger geschützt in dem Aufnahmebereich angeordnet ist. Das Rahmenteil weist vorzugsweise eine Höhe auf, die höher als die Dicke des Objektträgers ist, so dass der Objektträger vollständig innerhalb des Rahmenteils aufgenommen ist. Hierdurch ist eine Beschädigung des Objektträgers beim Handling der Aufnahmevorrichtung sowie ein Berühren der Oberfläche des Objektträgers vermieden. Vorzugsweise sind durch ein einziges Rahmenteil mehrere Aufnahmebereiche ausgebildet. Hierbei ist jeder Aufnahmebereich von einem Rahmen vollständig umgeben. Eine zwischen zwei benachbarten Objektträgern vorgesehene Wand des Rahmenteils dient somit als Teil des Rahmens zweier Aufnahmebereiche.

Die vorstehend beschriebenen Rahmenteile können jeweils einen Aufnahmebereich, vorzugsweise vollständig als umlaufender Zentrierrahmen, umgeben. Es kann sich aber auch um einzelne Rahmenteile handeln, die die Aufnahmebereiche nicht umgeben, sondern beispielsweise nur zur Aufnahme von Ecken des Objektträgers dienen, um diesen in der Aufnahmevorrichtung zu zentrieren. Hierbei ist ggf. das Einlegen der Objektträger in die Aufnahmevorrichtung erleichtert. Zur Erleichterung des Einlegens der Objektträger in die Aufnahmevorrichtung können die Zentrierelemente ferner angefast sein. Die Anfasung ist derart ausgebildet, dass der Aufnahmebereich, in dem jeweils ein Objektträger aufgenommen wird, nach oben hin erweitert ist, um das Einlegen eines Objektträgers zu erleichtern.

Bei einer besonders bevorzugten Ausführungsform weist das Bodenteil zumindest in den Aufnahmebereichen flexibles Material auf. Insbesondere besteht der gesamte Bodenteil aus einem durchgehenden flexiblen Material. Die Objektträger liegen auf diesem flexiblen Material auf. Das Verwenden von flexiblem Material hat den Vorteil, dass beispielsweise beim Berühren der Objektträger durch Pipetten o.dgl. eine gewisse Federung der Objektträger gewährleistet ist. Dies verringert wiederum die Gefahr von Beschädigungen der Objektträger während des Untersuchungsprozesses. Ebenso ist es möglich, den Objektträger beispielsweise horizontal auszurichten, indem geeignete Ausrichtelemente beispielsweise von unten gegen die Membran drücken und dadurch die Lage des Objektträgers verändern. Es ist somit ein sehr genaues Ausrichten des Objektträgers möglich, ohne den Objektträger selbst berühren zu müssen. Insbesondere ist es auch möglich, den Objektträger beispielsweise von unten durch eine geeignete Vorrichtung geringfügig anzuheben und beispielsweise gegen eine zweite Objektträgerplatte zu drücken.

Insbesondere handelt es sich bei dem flexiblem Material um eine wärmedurchlässige Membran. Es ist hierdurch möglich, unterhalb der einzelnen Aufnahmebereiche Heizelemente, wie beispielsweise Peltie-Elemente, vorzusehen, um einzelne Objektträger zu erwärmen. Mit Hilfe der erfindungsgemäßen Aufnahmevorrichtung ist ein sehr gezieltes Erwärmen ggf. auch nur einzelner Teilbereiche eines Objektträgers möglich, ohne den Objektträger unmittelbar handeln zu müssen. Eine Beschädigung des Objektträgers ist hierbei wiederum vermieden. Die Membran ist vorzugsweise derart ausgelegt, dass Temperaturen von 4 °C bis 100 °C auf den Objektträger übertragen werden können.

Um die erfindungsgemäße Aufnahmevorrichtung insbesondere in bestehenden Anlagen einsetzen zu können, entsprechen die Außenabmessungen der Aufnahmevorrichtung Standardabmessungen von Mikrotiterplatten. Insbesondere weist die Aufnahmevorrichtung eine Breite von 96 ± 4 mm und eine Länge von 128 ± 4 mm auf.

Das erfindungsgemäße Verfahren wird im folgenden anhand der Hybridisierungsuntersuchung von DNA-Fragmenten beschrieben. Es ist jedoch insbesondere auch für andere chemische und/oder biologische Proben geeignet, welche eine nachweisbare Affinität zueinander aufweisen, wobei es sich insbesondere um Untersuchungen von Antigen-Antikörper-Affinitäten handeln kann. Zur Durchführung des nachfolgend beschriebenen Verfahrens ist insbesondere die vorstehend beschriebene Untersuchungsvorrichtung geeignet.

Bei dem erfindungsgemäßen Verfahren wird eine erste Probe, bei der es sich beispielsweise um DNA-Stücke, d.h. Genfragmente, handelt, an einer oder mehreren Stellen positionstreu an dem Basisteil, vorzugsweise einem flachen Objektträger, angeordnet. Dies kann beispielsweise durch Auftropfen und anschließendes Anhaften der ersten Probe an festen Positionen des Objektträgers erfolgen.

Im nächsten Schritt wird das Basisteil mit einem Deckel zur Ausbildung einer Probenkammer verschlossen. Die erste Probe befindet sich somit innerhalb der Probenkammer.

Anschließend wird eine mit der ersten Probe zumindest teilweise reagierende zweite Probe der Probenkammer zugeführt. Bei dieser zweiten Probe kann es sich, wie in der Einleitung beschrieben, um mit Hilfe von Enzymen in DNA umgewandelte RNA eines zu untersuchenden Gewebes handeln. Diese DNA der zweiten Probe ist vorzugsweise fluoreszenzmarkiert.

Im nächsten erfindungsgemäßen Schritt wird die in der Probenkammer befindliche zweite Probe durch eine Fördereinrichtung, wie eine Pumpe, bewegt. Die Bewegung erfolgt derart, dass zumindest ein Teil der Probe aus der Probenkammer abgesaugt und der Probenkammer wieder zugeführt wird. Dies kann, wie vorstehend anhand der Untersuchungsvorrichtung beschrieben, auf unterschiedliche bevorzugte Ausführungsweisen geschehen.

Mit Hilfe des erfindungsgemäßen Verfahrens können sehr gute Untersuchungsergebnisse erzielt werden, da die zweite Probe in der Probenkammer bewegt wird und damit die in der zweiten Probe beispielsweise vorhandene DNA leichter die DNA-Fragmente der ersten Probe auffindet.

Das Bewegen der Probe erfolgt vorzugsweise durch ein Hin- und Herbewegen oder ein Umwälzen der zweiten Probe.

Bei einer bevorzugten Ausführungsform des Verfahrens wird zusammen mit oder nach der zweiten Probe eine dritte Probe der Probenkammer zugeführt. Bei der dritten Probe handelt es sich beispielsweise um eine Vergleichsprobe, die aus gesundem Gewebe generiert wurde. Diese DNA wird vorzugsweise ebenfalls mit einem geeigneten Marker, insbesondere einem fluoreszierenden Marker, markiert. Mit Hilfe der Fördereinrichtung werden sodann beide Proben, d.h. die zweite und die dritte Probe, gemeinsam innerhalb der Probenkammer in Bewegung versetzt bzw. über lange Zeiträume von mehreren Stunde in Bewegung gehalten.

Nach Abschluß der Reaktion, d.h. ggf. erst nach mehr als 10 bis 14 Stunden, wird die Probenkammer vorzugsweise gewaschen. Durch das Waschen werden die Trägersubstanzen der Proben sowie diejenigen Teile der Proben, die sich nicht mit einem fest auf dem Probenträger haftenden DNA-Stück verbunden haben, abgewaschen. Vorzugsweise erfolgt nach dem Waschen ein Trocknen des Basisteils bzw. des Objektträgers. Vorzugsweise erfolgt beim Verwenden der vorstehend beschriebenen Vorrichtung mit Aufnahmevorrichtung zur Aufnahme mehrerer Basisteile ein gemeinsames Trocknen von mehreren in der Aufnahmevorrichtung vorgesehen Basisteile. Anschließend, d.h. nach dem Waschen und/oder nach dem Trocknen des Basisteils, wird das Basisteil bzw. die Basisteile einem Detektionsgerät zugeführt. In diesem wird sodann beispielsweise mit Hilfe einer Laserlichtquelle und entsprechenden Detektoren eine Untersuchung der Probe vorgenommen. Bei der Verwendung von fluoreszierenden Farbmarkern unterschiedlicher Farben können auf Grund der detektierten Farbe Rückschlüsse auf die Art der Gewebeveränderung u.dgl. gezogen werden.

Nachfolgend wird die Erfindung anhand einer bevorzugten Ausführungsform unter Bezugnahme auf die anliegenden Zeichnungen näher erläutert. Es zeigen:

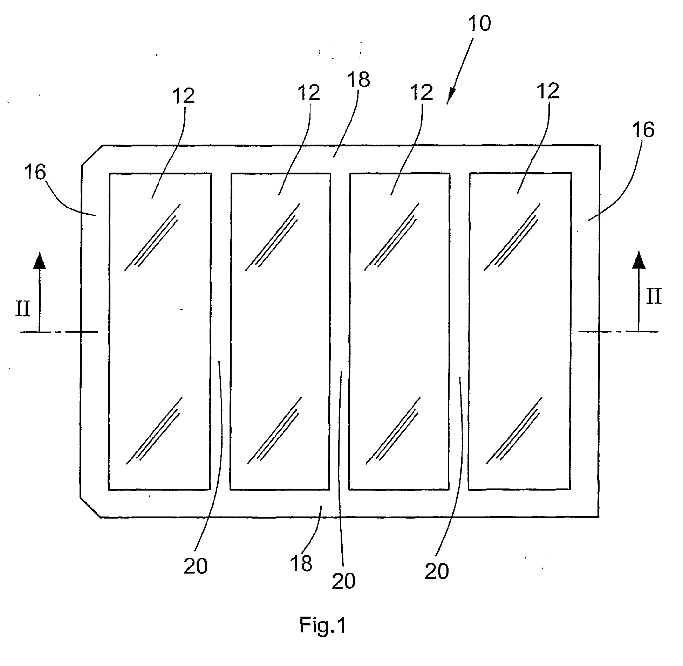

- Fig. 1: eine schematische Draufsicht einer bevorzugten Ausführungsform der Aufnahmevorrichtung mit mehrere eingelegten Basisteilen,
- Fig. 2: eine schematische Schnittansicht einer ersten bevorzugten Ausführungsform entlang der Linie II-II in Fig. 1, wobei zusätzlich das in Fig. 1 nicht dargestellte Kopfteil dargestellt ist,
- Fig. 3: eine schematische Schnittansicht einer zweiten bevorzugten Ausführungsform, die prinzipiell der in Fig. 1 dargestellten Ausführungsform entspricht,
- Fig. 4: ein einzelnes in die in Fig. 1 dargestellte Aufnahmevorrichtung einlegbares Basisteil und
- Fig. 5: eine schematische perspektivische Ansicht einer Untersuchungsvorrichtung, in die die Aufnahmevorrichtung einlegbar ist.

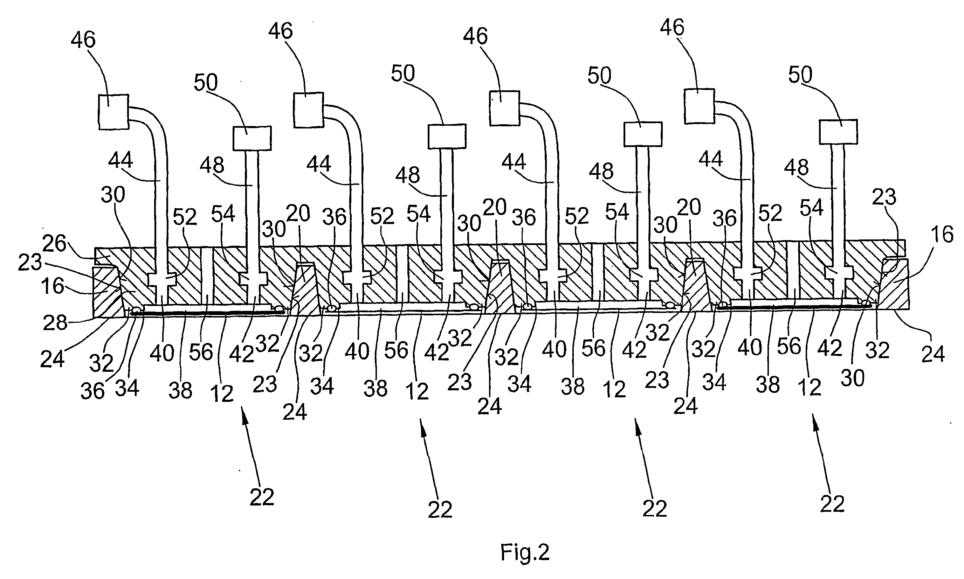

Eine Aufnahmevorrichtung 10 für mehrere Objektträger 12 weist ein Bodenteil 14 (Fig. 2) auf. Das Bodenteil 14 ist mit Zentrierelementen 16,18,20 verbunden. Im dargestellten Ausführungsbeispiel sind die Zentrierelemente 16,18,20 derart angeordnet, dass vier rechteckförmige Aufnahmebereiche 22 ausgebildet sind, in denen jeweils ein Objektträger 12 angeordnet werden kann. Die Zentrierelemente 16,18,20 weisen zwei einander gegenüberliegende kürzere Seitenwände 16 und zwei zwischen den Seitenwänden 16 angeordnete, ebenfalls einander gegenüberliegende längere Seitenwände 18 auf. Zwischen den Seitenwänden 18 sind im dargestellten Ausführungsbeispiel drei Zwischenwände 20 vorgesehen, die parallel zu den kürzeren Seitenwänden 18 angeordnet sind.

An den Unterseiten 24 der Zentrierelemente 16,18,20 ist das als Membran ausgebildete Bodenteil 14 befestigt. Die Aufnahmebereiche 22 weisen somit als Boden eine flexible Membran auf, auf der jeweils ein Objektträger 12 aufliegt. Es ist somit möglich, in Fig. 2 von unten gegen die Membran zu drücken, um den Objektträger beispielsweise horizontal auszurichten. Ferner kann von unten ein Heizelement an den Objektträger 12 angelegt werden. Auf Grund der Flexibilität der Membran legt sich der Objektträger 12 flach an die Oberfläche eines flachen Heizelementes an. Hierdurch ist ein gleichmäßiger und guter Wärmeübergang zwischen dem Heizelement und dem Objektträger gewährleistet.

Die Zentrierelemente 16,18,20 sind auf ihren Innenseiten 23, d.h. auf den in Richtung der Aufnahmebereiche 22 weisenden Seiten, abgeschrägt. Hierdurch ist die in Fig. 2 nach oben weisende Öffnung der einzelnen Aufnahmebereiche nach oben erweitert. Dies erleichtert das Einlegen der Objektträger 12 in die Aufnahmebereiche 22.

Ein erfindungsgemäßer Deckel bzw. ein Kopfteil 26 ist derart ausgebildet, dass er in die einzelnen zwischen den Zentrierelementen 16,18,20 ausgebildeten Aufnahmebereiche 22 hineinragt. Hierzu weist der Deckel 26 im dargestellten Ausführungsbeispiel vier Ansätze 28 auf, die einen im wesentlichen rechteckigen Querschnitt haben. Die Seitenwände 30 der Ansätze 28 liegen an den Innenwänden der stegförmigen Zentrierelemente 16,20 an. Ebenso liegen in Fig. 2 nicht dargestellte Seitenwände des Ansatzes 28 an den stegförmigen Zentrierelementen 18 an. Auf der dem Basisteil bzw. dem Probenträger 12 zugewandten Unterseite des Deckels 26 sind je Aufnahmebereich 22 rahmenförmige Ansätze 32 vorgesehen. Der rahmenförmige Ansatz ist umlaufend. An einer Unterseite 34 des rahmenförmigen Ansatzes 32 ist eine ebenfalls umlaufende Dichtung 36 vorgesehen. Die Dichtung 36 liegt auf einem äußeren Rand des Probenträgers 12 auf und dichtet den Probenträger gegenüber dem Deckel 26 ab. Auf Grund des rahmenförmigen Ansatzes 32 ist innerhalb des rahmenförmigen Ansatzes 32 zwischen einer Deckelinnenseite 36 und dem Probenträger 12 eine Probenkammer 38 ausgebildet.

Zur Bewegung von in der Probenkammer 38 vorgesehenen Proben sind in dem Deckel 26 zwei mit der Probenkammer 38 verbundene Kanäle 40,42 vorgesehen. Der Kanal 40 ist beispielsweise über einen Schlauch 44 mit einer Pumpe 46 verbunden. Entsprechend ist der Kanal 42 über einen Schlauch 48 mit einer Pumpe 50 verbunden. Die beiden Pumpen 46,50 sind über eine vorzugsweise gemeinsame Steuereinheit gesteuert. Von den Pumpen 46,50 wird abwechselnd ein Teil der in der Probenkammer befindlichen Probe in den Kanal 40 bzw. 42 eingesaugt und anschließend wieder in die Probenkammer 38 abgegeben. Hierdurch ist ein Bewegen der Probe in der Probenkammer 38 verwirklicht, so dass sich beispielsweise beim Verwenden der Vorrichtung zur Untersuchung von DNA-Affinitäten zusammengehörende Probenteile leichter verbinden.

Innerhalb des Deckels 26 sind ferner zwei Aufnahmekammern 52,54 vorgesehen. Die Aufnahmekammer 52 ist mit dem Kanal 40 und die Aufnahmekammer 54 mit dem Kanal 42 verbunden. Durch die Größe der Aufnahmekammern 52,54 kann die Menge an Probe, die aus der Probenkammer 38 entnommen wird, aufgefangen werden. Es ist ebenso möglich, dass die beiden Pumpen 46,50 unmittelbar mit den Aufnahmekammern 52,54 verbunden und ggf. innerhalb oder auf der Oberseite des Deckels 26 angeordnet sind.

Zum Zuführen einer Probe in die Probenkammer 38 ist in dem Deckel 26 ein weiterer mit der Probenkammer 38 verbundener Kanal 56 vorgesehen. Durch diesen können, nachdem der Deckel 26 bereits auf die Aufnahmevorrichtung 10 aufgesetzt ist, in die bereits dicht verschlossene Probenkammer 38 Proben zugeführt werden. Ebenso kann ein Zuführen der Probe durch einen der beiden Kanäle 40,42, der hierfür ggf. verzweigt ist, erfolgen.

Zur Verbesserung der Bewegung in der Probenkammer 38 können die Kanäle 40,42 verzweigt sein, so dass mehrere Kanäle 40,42 mit der Probenkammer 38 verbunden sind. Ferner ist es möglich, eine Vielzahl von Kanälen 40,42 je Probenkammer 38 in dem Deckel 26 vorzusehen. Vorzugsweise ist hierbei die Hälfte der Kanäle mit derselben Pumpe verbunden.

Der Deckel 26 ist mit einer nicht dargestellten Haltevorrichtung gehalten. Die Haltevorrichtung kann in Fig. 2 vertikal bewegt werden. Durch die Vertikalbewegung der Haltevorrichtung zusammen mit dem Deckel 26 ist ein automatisches Absenken des Deckels 26 in die Aufnahmebereiche 22 der Aufnahmevorrichtung 10 möglich. Hierbei wird die an den rahmenförmigen Ansätzen 32 vorgesehene Dichtung 36 auf einen Randbereich der Probenträger 12 gedrückt und die Probenkammer 38 ausgebildet. Da die Probenträger 12 auf einer als Bodenteil 14 dienenden elastischen Membran aufliegen, ist ein Beschädigen der Probenträger durch das Absenken des Deckels 26 vermieden. Ferner dient die elastische Membran 14 dazu, ein dichtes Abschließen zwischen dem Deckel 26 und den Probenträgern 12 zu gewährleisten.

Ebenso ist es möglich, anstatt dem Bewegen des Kopfteils bzw. Deckels 26 den Probenträger 12 selbst in Fig. 2 nach oben zu bewegen, um eine dicht abgeschlossene Probenkammer 38 zu realisieren. Der Probenträger 12 kann beispielsweise mit Hilfe einer stempelförmigen Vorrichtung, die vertikal verschiebbar ist, nach oben gedrückt werden. Ebenso ist eine Kombination dieser beiden Bewegungen möglich.

Die Probenkammer 38, die sich im dargestellten Ausführungsbeispiel im wesentlichen über den gesamten Probenträger 12 erstreckt, kann auch in mehrere einzelne Probenkammern unterteilt werden. Hierzu sind an der Unterseite des Deckels 26 die Probenkammer 38 unterteilende Stege angeordnet. An der in Richtung des Probenträgers 12 weisenden Seite der Stege sind vorzugsweise Dichtungen entsprechend den Dichtungen 36 zum Abdichten der entstehenden einzelnen Probenkammern vorgesehen. Jede einzelne entstehende Probenkammer ist vorzugsweise, wie vorstehend beschrieben, mit Kanälen 40,52,56 sowie den entsprechenden vorzugsweisen Ausgestaltungen versehen. Jede einzelne Teilprobenkammer, in die die Probenkammer 38 unterteilt ist, kann somit unabhängig von benachbarten Probenkammern mit Hybridisierungsflüssigkeit gefüllt und wie vorstehend beschrieben gehandhabt werden. Durch die Unterteilung der Probenkammer 38 in mehrere Teilprobenkammern können unter Verwendung eines Standard-Objektträgers 12 unterschiedliche Proben auf unterschiedliche Weise untersucht werden. Insbesondere können auch identische Proben, die beispielsweise unterschiedlichen Patienten entnommen wurden, mit gleichen Hybridisierungsflüssigkeiten oder gleiche Proben eines Patienten mit unterschiedlichen Hybridisierungsflüssigkeiten untersucht werden. Vorteilhaft ist hierbei insbesondere, dass handelsübliche Objektträger als Probenträger 12 eingesetzt werden können.

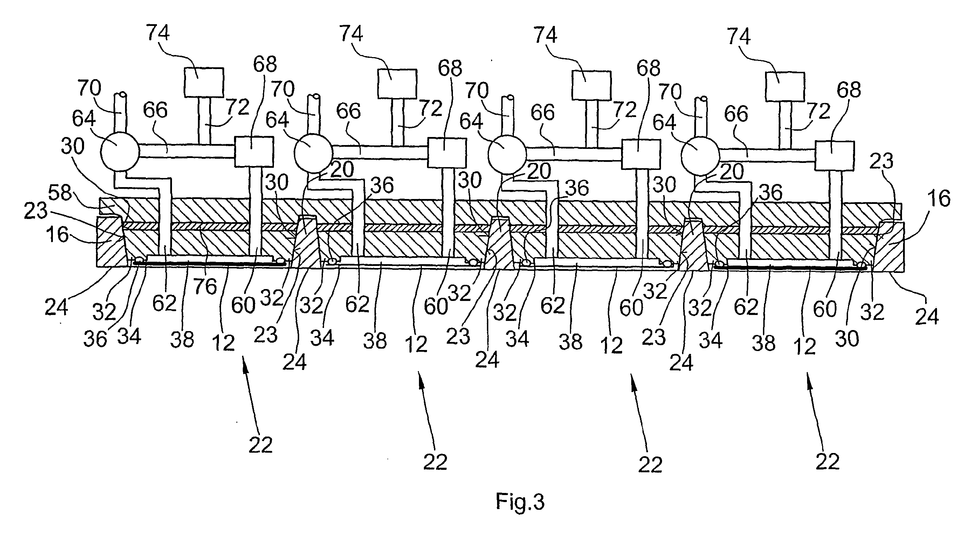

Eine zweite bevorzugte Ausführungsform (Fig. 3) weist einen der anhand Fig. 2 beschriebenen identischen unteren Bereich auf. Der Deckel bzw. das Kopfteil 58 sind bei dieser Ausführungsform unterschiedlich gestaltet. Identische oder ähnliche Bestandteile der Vorrichtung sind in Fig. 3 mit den gleichen Bezugszeichen bezeichnet.

Das Kopfteil 58 weist einen mit der Probenkammer 38 verbundenen Zuführkanal 60 und einen mit der Probenkammer 38 verbundenen Abführkanal 62 auf. Der Kanal 62 ist über ein Ventil 64 und einen Kanal 66 mit einer Pumpe 68 verbunden. Die Pumpe 68 ist sodann mit dem Zuführkanal 66 verbunden. Das Ventil 64 ist ferner mit einem Ablauf 70 verbunden. Der Kanal 66 ist über einen weiteren Kanal 72 mit einem Mediumreservoir 74 verbunden.

Die Stellung des Ventils 64 kann beispielsweise derart gewählt werden, dass die in der Probenkammer 38 befindliche Probe umgewälzt wird. Die Probe wird somit aus der Kammer 38 durch den Abführkanal 62 abgesaugt, über den Kanal 66 der Pumpe 68 zugeführt und sodann über den Kanal 66 wieder der Probenkammer 38 zugeführt.

Um einen Teil der Probe durch den Ablauf 70 abzuführen, kann das Ventil 64 in einer Zwischenstellung angeordnet sein, so dass ein Teil der durch den Kanal 62 zu dem Ventil 64 gelangenden Probe in den Kanal 70 und ein anderer Teil in den Kanal 66 geleitet wird.

Ebenso ist es möglich, das Ventil 64 so einzustellen, dass der Kanal 66 verschlossen ist und die gesamte Probe in Richtung des Ablaufs 70 gefördert wird. Hierzu wird neue Probenflüssigkeit aus dem Reservoir 74 mit Hilfe der Pumpe 68 der Probenkammer 38 zugeführt und die hierin vorhandene Probe aus der Probenkammer 38 gedrückt. Um die gesamte Probe auswechseln zu können, muss auch der Kanal 66 entleert werden. Hierzu wird das Ventil 64 nach dem Entfernen der Probe aus der Probenkammer 38 umgeschaltet, so dass die in dem Kanal 66 verbliebene Probe zumindest bis in den Kanal 66 gedrückt wird. Anschließend wird das Ventil 64 wieder geöffnet und die in dem Kanal 66 der Probenkammer 38 und dem Kanal 62 enthaltene Probe in den Ablauf 70 gedrückt.

Ferner ist in dem Kopfteil oder Deckel 58 ein Heizelement 76 vorgesehen, durch das die in der Probenkammer 38 vorhandene Probe temperiert werden kann.

Vorzugsweise ist für jede einzelne der im dargestellten Ausführungsbeispiel vier Probenkammern 38 eine gesonderte Pumpe 68 vorgesehen. Vorzugsweise ist für mehrere, insbesondere für alle Probenkammern 38, nur ein Mediumreservoir vorgesehen. Zum gesonderten Austausch von Probe in den einzelnen Probenkammern 38 sind sodann entsprechend steuerbare Ventile in den Kanälen vorgesehen.

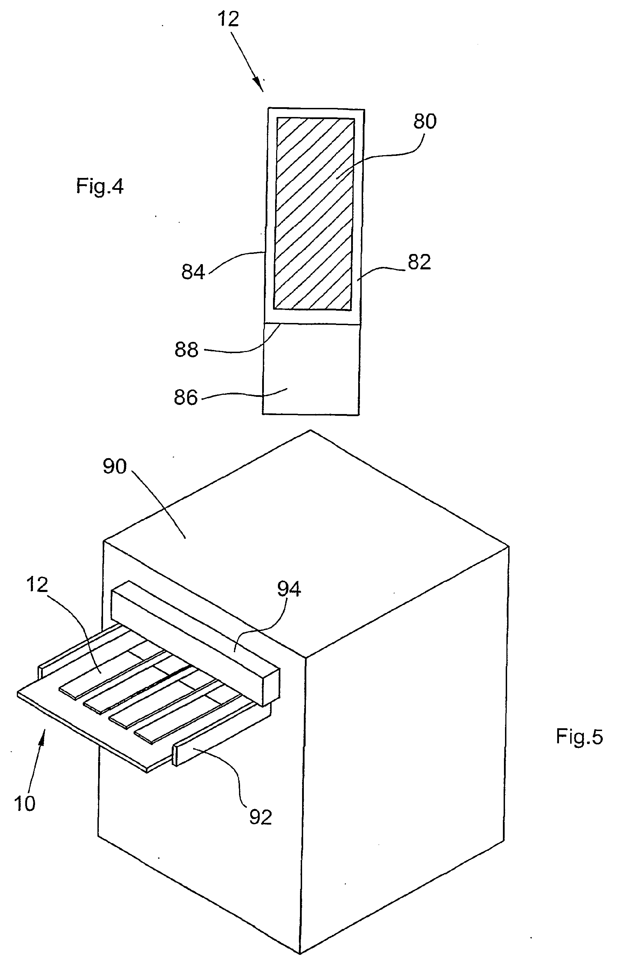

Die einzelnen Objektträger 12 dienen beispielsweise zur Untersuchung von DNA-Proben. Hierzu ist jeder Objektträger, wie in Fig. 4 dargestellt, in unterschiedliche Bereiche unterteilt. In einem inneren Bereich 86 werden beispielsweise Probentröpfchen aufgebracht, die sich sodann fest mit dem Probenträger 12 verbinden. Der Bereich 86 dient somit als Fläche zur Anordnung eines Arrays. Der Bereich 86 ist von einem vorzugsweise 2,5 mm breiten Rand 82 umgeben. Der Rand 82 dient beispielsweise dazu, dass sämtliche in dem Bereich 86 vorgesehenen Proben einen ausreichenden Abstand zu den Außenkanten 84 des Objektträgers 12 aufweisen. In dem Randbereich 82 liegt bei abgesenktem Deckel 26 die Dichtung 36 auf. Ein Bereich 86, der durch die in Fig. 3 dargestellte Linie 88 von dem Rand 82 abgetrennt ist, dient zum Anfassen des Probenträgers 12. In diesem Bereich sind keine Proben angeordnet, so dass der Objektträger 12 in dem Bereich 86 gehandhabt werden kann. Beispielsweise ist der Anfassbereich 86 erforderlich, um den Objektträger 12 in die erfindungsgemäße Aufnahmevorrichtung 10 einlegen zu können.

Die Aufnahmevorrichtung 10 kann in eine einen Hybridisierungskopf bzw. de Deckel 26 aufweisende Untersuchungsvorrichtung 90 (Fig. 5) eingeführt werden. Hierzu weist die Untersuchungsvorrichtung 90 eine schubladenartige Aufnahmeeinrichtung 92 zur Aufnahme der Aufnahmevorrichtung 10 auf. Die Schublade kann entsprechend einer Schublade eines CD-Players o.dgl. ausgebildet sein. Bei geöffneter Schublade 92 wird die die Objektträger 12 tragende Aufnahmevorrichtung 10 von oben in die Schublade eingelegt und sodann in die Untersuchungsvorrichtung 90 verfahren.

Innerhalb der Untersuchungsvorrichtung 90 ist der Deckel 26 derart angeordnet, dass er, nachdem die Aufnahmevorrichtung 10 in die Untersuchungsvorrichtung 90 verfahren wurde, nach unten auf die Objektträger 12 abgesenkt wird.

Zusätzlich ist oberhalb der Schublade 92 ein Trockenkopf 94 vorgesehen. Der Trockenkopf 94 ist mit einem Gebläse ausgestattet. Nach Abschluss des Hybridisierungsprozesses wird die Schublade wieder aus der Untersuchungsvorrichtung 90 herausgefahren. Hierbei wird die auf den Probenträgern 12 verbleibende Proben- oder Waschflüssigkeit mit Hilfe des Trockenkopfes 94 entfernt. Der Trockenkopf weist vorzugsweise mehrere Auslass- und Einlassöffnungen auf. Von den Einlassöffnungen wird die vom Trockenkopf abgegebene Luft oder ein anderes Trockenmedium wieder eingesaugt. Hierdurch ist vermieden, dass keine Probenflüssigkeitsbestandteile in die Umgebung gelangen. Hierbei ist die Querschnittsfläche des ansaugenden Einlasses größer als die des Auslasses, so dass stets mehr Luft von dem Trockenkopf 94 eingesaugt als abgegeben wird. Hierdurch ist die Gefahr, dass Bestandteile der Probe in die Umgebung gelangen, weiter verringert. Bei den Ein- und/oder Auslässen kann es sich um schlitzförmige über die Breite des Trockenkopfes verlaufende Öffnungen handeln.

Um ein vollständiges Trocknen der Probenträger 12 zu gewährleisten, kann die Schublade 92 mehrfach hin und her verfahren werden.

Zusätzlich ist es möglich, vor dem Trocknen der Probenträger diese zu waschen. Vorzugsweise wird dies mit Hilfe des Deckels 26, d.h. bei noch geschlossenen Probenkammern 38, durchgeführt. Der Waschvorgang wird somit innerhalb der Untersuchungsvorrichtung durchgeführt. Hierzu kann eine Waschflüssigkeit über in dem Deckel 26 vorgesehene gesonderte Kanäle oder über die Kanäle 40,42 der Probenkammer zu- und aus dieser wieder abgeführt werden. Bevor der Deckel innerhalb der Untersuchungsvorrichtung nach oben verfahren wird und somit die Probenkammer 38 nicht mehr dicht ist, wird die in der Probenkammer befindliche Flüssigkeit vorzugsweise weit gehend abgesaugt. Das Absaugen erfolgt vorzugsweise wiederum über die bereits vorhandenen Kanäle 40,42.

## Patentansprüche

1. Untersuchungsvorrichtung zum Untersuchen chemischer und/oder biologischer Proben, mit
einer von einem Basisteil (12) und einem Kopfteil (26;58) gebildeten Probenkammer (38) zur Aufnahme der Probe und
einer Bewegungseinrichtung (46,50;68) zum Bewegen der Probe in der Probenkammer (38),
**dadurch gekennzeichnet,**
**dass** die Bewegungseinrichtung eine Fördereinrichtung (46,50;68) aufweist, um zumindest einen Teil der Probe aus der Probenkammer (38) abzusaugen und der Probenkammer (38) wieder zuzuführen.

2. Untersuchungsvorrichtung nach Anspruch 1, **dadurch gekennzeichnet, dass** die Fördereinrichtung mit einer Aufnahmekammer (52,54) zur Aufnahme und anschließenden Abgabe eines Teils der Probe verbunden ist.

3. Untersuchungsvorrichtung nach Anspruch 2, **dadurch gekennzeichnet, dass** mindestens zwei Aufnahmekammern (52,54) vorgesehen sind, die abwechselnd einen Teil der Probe aufnehmen und abgeben.

4. Untersuchungsvorrichtung nach Anspruch 2 oder 3, **dadurch gekennzeichnet, dass** mindestens eine Aufnahmekammer (52,54) im Kopfteil (26;58) vorgesehen ist.

5. Untersuchungsvorrichtung nach einem der Ansprüche 1 - 4, **dadurch gekennzeichnet, dass** das Kopfteil (26;58) einen Zuführkanal (56) zum Zuführen der Probe in die Probekammer aufweist.

6. Untersuchungsvorrichtung nach Anspruch 1, **dadurch gekennzeichnet, dass** die Fördereinrichtung (68) über einen Zuführkanal (66) und einen Abführkanal (62) mit der Probenkammer (38) zum Umwälzen der Probe verbunden ist.

7. Untersuchungsvorrichtung nach Anspruch 1 oder 6, **gekennzeichnet durch** ein im Abführkanal (62) angeordnetes Ventil (64), das mit einem Ablauf (70) verbunden ist.

8. Untersuchungsvorrichtung nach einem der Ansprüche 1,6 oder 7, **gekennzeichnet durch** ein mit der Fördereinrichtung (68) verbundenes Mediumreservoir (74).

9. Untersuchungsvorrichtung nach einem der Ansprüche 1 - 8, **dadurch gekennzeichnet, dass** die Probenkammer (38) durch einen am Kopfteil (26;58) vorgesehenen umlaufenden rahmenförmigen Ansatz (32) gebildet ist.

10. Untersuchungsvorrichtung nach Anspruch 9, **dadurch gekennzeichnet, dass** der Ansatz eine Dichtung (36) aufweist.

11. Untersuchungsvorrichtung nach einem der Ansprüche 1 - 10, **dadurch gekennzeichnet, dass** das Basisteil ein ebener Probenträger (12) ist.

12. Untersuchungsvorrichtung nach einem der Ansprüche 1 - 11, **gekennzeichnet durch** eine Aufnahmevorrichtung für mehrere Objektträger (12), mit
einem Bodenteil (14) und
mit dem Bodenteil (14) verbundenen Zentrierelementen (16,18,20), wobei die Zentrierelemente (16,18,20) derart angeordnet sind, dass mehrere Aufnahmebereiche (22) zur Aufnahme jeweils eines Objektträgers (12) ausgebildet sind.

13. Untersuchungsvorrichtung nach Anspruch 12, **dadurch gekennzeichnet, dass** die Zentrierelemente (16,18,20) durch einstückige Rahmenteile gebildet sind und das Rahmenteil derart ausgebildet ist, dass jeder Aufnahmebereich (22) von einem umlaufenden Zentrierrahmen (16,18,20) umgeben ist.

14. Untersuchungsvorrichtung nach Anspruch 12 oder 13, **dadurch gekennzeichnet, dass** die Zentrierelemente (16,18,20) in Richtung des Aufnahmebereichs (22) angefast sind.

15. Untersuchungsvorrichtung nach einem der Ansprüche 12 - 14, **dadurch gekennzeichnet, dass** das Bodenteil (14) zumindest in den Aufnahmebereichen (22) aus flexiblem Material, insbesondere aus einer wärmedurchlässigen flexiblen Membran besteht.

16. Verfahren zum Untersuchen chemischer und/oder biologischer Proben, insbesondere zur Hybridisierungsuntersuchung von DNA-Fragmenten, bei welchem
eine erste Probe derart einem Basisteil (12) zugeführt wird, dass die Probe an einer oder mehreren Stellen positionstreu am Basisteil (12) angeordnet ist,
das Basisteil (12) mit einem Kopfteil (26;58) zur Ausbildung einer Probenkammer (38) verschlossen wird,
eine mit der ersten Probe zumindest teilweise reagierende zweite Probe der Probenkammer (38) zugeführt wird und
die zweite Probe durch eine Fördereinrichtung (46,50;68) bewegt wird, indem zumindest ein Teil der zweiten Probe abgesaugt und der Probenkammer (38) wieder zugeführt wird.

17. Verfahren nach Anspruch 16, bei welchem ein Teil der zweiten Probe in eine Aufnahmekammer (52,54) eingesaugt und aus dieser wieder abgegeben wird.

18. Verfahren nach Anspruch 17, bei welchem mindestens zwei Aufnahmekammern (52,54) vorgesehen sind, die abwechselnd einen Teil der Probe aufnehmen und abgeben.

19. Verfahren nach Anspruch 16, bei welchem die zweite Probe durch Umwälzen in der Probenkammer (38) bewegt wird.

20. Verfahren nach einem der Ansprüche 16 - 19, bei welchem zumindest ein Teil der zweiten Probe abgeführt wird.

21. Verfahren nach Anspruch 20, bei welchem der abzuführende Teil der Probe durch neu zugeführte Probe aus der Probenkammer (38) gedrückt wird.

22. Verfahren nach einem der Ansprüche 16 - 21, bei welchem die erste Probe auf einen als Basisteil (12) dienenden flachen Objektträger zugeführt wird und an einer oder mehreren Stellen des Objektträgers positionstreu haftet.

23. Verfahren nach einem der Ansprüche 16 - 22, bei welchem zusammen mit oder nach der zweiten Probe, eine dritte Probe der Probenkammer (38) zugeführt wird.

24. Verfahren nach einem der Ansprüche 16 - 23, bei welchem die zweite Probe aus biologischem Material gewonnen wurde.

25. Verfahren nach Anspruch 23, bei welchem die dritte Probe eine aus biologischem Material gewonnene Vergleichsprobe ist.

26. Verfahren nach einem der Ansprüche 23 - 25, bei welchem die zweite und dritte Probe unterschiedlich fluoreszenzmarkiert wird.

27. Verfahren nach einem der Ansprüche 16 - 26, bei welchem die Probenkammer (38) nach Reaktionsabschluss gewaschen wird.

28. Verfahren nach Anspruch 27, bei welchem das Basisteil (12) nach dem Waschen getrocknet wird.

29. Verfahren nach Anspruch 28 oder 29, bei welchem nach dem Waschen oder dem Trocknen das Basisteil (12) einem Detektionsgerät zugeführt wird.

## Claims

1. An analyzing device for analyzing chemical and/or biological sampies, comprising
a sample chamber (38) for receiving the sample, said sample chamber (38) being composed of a base portion (12) and a head portion (26;58), and
a moving means (46,50;68) for moving the sample in said sample chamber (38),
**characterized in that**
said moving means comprises a conveying means (46,50;68) for drawing off said sample chamber (38) at least a portion of the sample and returning said portion of the sample to said sample chamber (38).

2. The analyzing device according to claim 1, **characterized in that** the conveying means is connected with a receiving chamber (52,54) for receiving and subsequently delivering a portion of the sample.

3. The analyzing device according to claim 2, **characterized in that** at least two receiving chambers (52,54) are provided which alternately receive and deliver a portion of the sample.

4. The analyzing device according to claim 2 or 3, **characterized in that** at least one receiving chamber (52,54) is provided in the head portion (26; 58).

5. The analyzing device according to any one of claims 1-4, **characterized in that** the head portion (26;58) comprises a supply channel (56) for supplying the sample to the sample chamber.

6. The analyzing device according to claim 1, **characterized in that** the conveying means (68) is connected with the sample chamber (38) via a supply channel (66) and a discharge channel (62) for circulating the sample.

7. The analyzing device according to claim 1 or 6, **characterized by** a valve (64) arranged in the discharge channel (62), said valve (64) being connected with a drain (70).

8. The analyzing device according to any one of claims 1, 6 or 7, **characterized by** a medium reservoir (74) connected with the conveying device (68).

9. The analyzing device according to any one of claims 1-8, **characterized in that** the sample chamber (38) is defined by a circumferential frame-shaped projection (32) provided at the head portion (26;58).

10. The analyzing device according to claim 9, **characterized in that** the projection comprises a seal (36).

11. The analyzing device according to any one of claims 1-10, **characterized in that** the base portion is a flat object holder (12).

12. The analyzing device according to any one of claims 1-11, **characterized by** a receiving device for a plurality of object holders (12), comprising
a bottom portion (14), and
centering elements (16,18,20) connected with said bottom portion (14), wherein said centering elements (16,18,20) are arranged such that a plurality of receiving zones (22) for receiving a respective object holder (12) are defined.

13. The analyzing device according to claim 12, **characterized in that** the centering elements (16,18,20) are defined by integral frame portions, and the frame portion is configured such that each receiving zone (22) is surrounded by a circumferential centering frame (16,18,20).

14. The analyzing device according to claim 12 or 13, **characterized in that** the centering elements (16,18,20) are chamfered in the direction of the receiving zone (22).

15. The analyzing device according to any one of claims 12-14, **characterized in that** the bottom portion (14) is made of a flexible material, in particular a heat-transmitting flexible membrane, at least in the receiving zones (22).

16. A method for analyzing chemical and/or biological samples, in particular for hybridization analysis of DNA fragments, wherein
a first sample is supplied to a base portion (12) such that the sample is arranged true-to-position at one or a plurality of locations at said base portion (12),
said base portion (12) is closed with a head portion (26;58) for defining a sample chamber (38),
a second sample at least partly reacting on the first sample is supplied to said sample chamber (38), and
the second sample is moved through a conveying means (46,50;68) by drawing off and returning to said sample chamber (38) at least a portion of the second sample.

17. The method according to claim 16, wherein a portion of the second sample is drawn into a receiving chamber (52,54) and delivered therefrom.

18. The method according to claim 17, wherein at least two receiving chambers (52,54) are provided which alternately receive and deliver a portion of the sample.

19. The method according to claim 16, wherein the second sample is moved by circulation in the sample chamber (38).

20. The method according to any one of claims 16-19, wherein at least a portion of the second sample is discharged.

21. The method according to claim 20, wherein the portion of the sample to be discharged is pressed out of the sample chamber (38) by the newly supplied sample.

22. The method according to any one of claims 16-21, wherein the first sample is supplied to a flat object holder serving as the base portion (12) and adheres true-to-position to one or a plurality of locations at the object holder.

23. The method according to any one of claims 16-22, wherein a third sample is supplied, together with or after the second sample, to the sample chamber (38).

24. The method according to any one of claims 16-23, wherein the second sample is extracted from biological material.

25. The method according to claim 23, wherein the third sample is a reference sample extracted from biological material.

26. The method according to any one of claims 23-25, wherein the second and the third sample are marked by different fluorescent markers.

27. The method according to any one of claims 16-26, wherein the sample chamber (38) is washed after termination of the reaction.

28. The method according to claim 27, wherein the base portion (12) is dried after the washing.

29. The method according to claim 28 or 29, wherein the base portion (12) is fed to a detection means after washing or drying.

## Revendications

1. Appareil d'analyse pour analyser des échantillons chimiques et/ou biologiques, comprenant
une chambre à échantillons (38) formée d'un élément de base (12) et d'un élément de tête (26 ; 58), destinée à recevoir l'échantillon, et
un dispositif de déplacement (46, 50 ; 68) destiné à déplacer l'échantillon dans la chambre à échantillons (38),
**caractérisé**
**en ce que** le dispositif de déplacement présente un dispositif de transport (46, 50 ; 68), pour extraire par aspiration de la chambre à échantillons (38), au moins une partie de l'échantillon, et la ramener à la chambre à échantillons (38).

2. Appareil d'analyse selon la revendication 1, **caractérisé en ce que** le dispositif de transport est relié à une chambre de réception (52, 54) destinée à recevoir et délivrer ensuite une partie de l'échantillon.

3. Appareil d'analyse selon la revendication 2, **caractérisé en ce qu'**il est prévu au moins deux chambres de réception (52, 54) qui, en alternance, reçoivent et délivrent une partie de l'échantillon.

4. Appareil d'analyse selon la revendication 2 ou 3, **caractérisé en ce qu'**au moins une chambre de réception (52, 54) est prévue dans l'élément de tête (26 ; 58).

5. Appareil d'analyse selon l'une des revendications 1 à 4, **caractérisé en ce que** l'élément de tête (26 ; 58) présente un canal d'amenée (56), destiné à amener l'échantillon dans la chambre à échantillons.

6. Appareil d'analyse selon la revendication 1, **caractérisé en ce que** le dispositif de transport (68) est relié, par l'intermédiaire d'un canal d'amenée (66) et d'un canal d'évacuation (62), à la chambre à échantillons (38), pour mettre l'échantillon en circulation.

7. Appareil d'analyse selon la revendication 1 ou 6, **caractérisé par** une vanne (64) disposée dans le canal d'évacuation (62), vanne qui est reliée à un déversoir (70).

8. Appareil d'analyse selon l'une des revendications 1, 6 ou 7, **caractérisé par** un réservoir de fluide (74) relié au dispositif de transport (68).

9. Appareil d'analyse selon l'une des revendications 1 à 8, **caractérisé en ce que** la chambre à échantillons (38) est formée par une partie saillante (32) périphérique, en forme de cadre, prévue sur l'élément de tête (26 ; 58).

10. Appareil d'analyse selon la revendication 9, **caractérisé en ce que** la partie saillante présente une garniture d'étanchéité (36).

11. Appareil d'analyse selon l'une des revendications 1 à 10, **caractérisé en ce que** l'élément de base est un porte-échantillons (12) plan.

12. Appareil d'analyse selon l'une des revendications 1 à 11, **caractérisé par** une structure de réception pour plusieurs porte-objets (12), comprenant
un élément de fond (14) et
des organes de centrage (16, 18, 20) reliés à l'élément de fond (14), les organes de centrage (16, 18, 20) étant alors positionnés de telle façon que plusieurs zones de réception (22), destinées à recevoir chacune un porte-objets (12), soient ménagées.

13. Appareil d'analyse selon la revendication 12, **caractérisé en ce que** les organes de centrage (16, 18, 20) sont formés par des éléments de cadre en une pièce et l'élément de cadre est configuré de telle façon que chaque zone de réception (22) soit entourée par un cadre de centrage (16, 18, 20) périphérique.

14. Appareil d'analyse selon la revendication 12 ou 13, **caractérisé en ce que** les organes de centrage (16, 18, 20) sont biseautés en direction de la zone de réception (22).

15. Appareil d'analyse selon l'une des revendications 12 à 14, **caractérisé en ce que** l'élément de fond (14) est constitué, au moins dans les zones de réception (22), d'un matériau flexible, en particulier d'une membrane flexible perméable à la chaleur.

16. Procédé pour analyser des échantillons chimiques et/ou biologiques, en particulier pour l'analyse, par hybridation, de fragments d'ADN, suivant lequel
un premier échantillon est amené à un élément de base (12) d'une manière telle, que l'échantillon soit, sur l'élément de base (12), disposé en un ou plusieurs emplacements de position constante,
l'élément de base (12) est clos à l'aide d'un élément de tête (26 ; 58) afin de former une chambre à échantillons (38),
un deuxième échantillon réagissant, au moins partiellement, avec le premier échantillon, est amené à la chambre à échantillons (38), et
le deuxième échantillon est déplacé par un dispositif de transport (46, 50 ; 68), par suite du fait qu'au moins une partie du deuxième échantillon est extraite par aspiration et ramenée à la chambre à échantillons (38).

17. Procédé selon la revendication 16, suivant lequel une partie du deuxième échantillon est introduite par aspiration dans une chambre de réception (52, 54) et est redélivrée depuis cette dernière.

18. Procédé selon la revendication 17, suivant lequel il est prévu au moins deux chambres de réception (52, 54) qui, en alternance, reçoivent et délivrent une partie de l'échantillon.

19. Procédé selon la revendication 16, suivant lequel le deuxième échantillon est déplacé par mise en circulation dans la chambre à échantillons (38).

20. Procédé selon l'une des revendications 16 à 19, suivant lequel au moins une partie du deuxième échantillon est évacuée.

21. Procédé selon la revendication 20, suivant lequel la partie à évacuer de l'échantillon est poussée hors de la chambre à échantillons (38) par de l'échantillon nouvellement amené.

22. Procédé selon l'une des revendications 16 à 21, suivant lequel le premier échantillon est amené sur un porte-objets plat, faisant office d'élément de base (12), et adhère en un ou plusieurs emplacements du porte-objets dans des positions constantes.

23. Procédé selon l'une des revendications 16 à 22, suivant lequel un troisième échantillon est amené à la chambre à échantillons (38) conjointement avec ou après le deuxième échantillon.

24. Procédé selon l'une des revendications 16 à 23, suivant lequel le deuxième échantillon a été prélevé d'un matériau biologique.

25. Procédé selon la revendication 23, suivant lequel le troisième échantillon est un échantillon comparatif prélevé d'un matériau biologique.

26. Procédé selon l'une des revendications 23 à 25, suivant lequel les deuxième et troisième échantillons font l'objet de marquages par fluorescence différents.

27. Procédé selon l'une des revendications 16 à 26, suivant lequel la chambre à échantillons (38) est lavée une fois la réaction terminée.

28. Procédé selon la revendication 27, suivant lequel l'élément de base (12) est séché après le lavage.

29. Procédé selon la revendication 28 ou 29, suivant lequel après le lavage ou le séchage, l'élément de base (12) est amené à un détecteur.
